# EUROPEAN PATENT SPECIFICATION

(11) **EP 3 507 169 B1**
(45) Date of publication and mention of the grant of the patent: **29.09.2021**
(21) Application number: 16760035.2
(22) Date of filing: 30.08.2016
(51) Int. Cl.: B62D 5/04

(54) **MOISTURE SENSING IN ELECTRIC MOTORS OF MOTOR VEHICLE STEERING SYSTEMS BASED ON GALVANIC POTENTIAL**
FEUCHTIGKEITSMESSUNG IN EINEM ELEKTROMOTOR EINER SERVOLENKUNG EINES FAHRZEUGS BASIERT AUF GALVANISHES POTENTIAL
MESURE D'HUMIDITÉ DANS UN MOTEUR D'UNE DIRECTION ASSISTÉE DE VÉHICULE BASÉE SUR UN POTENTIEL GALVANIQUE

(43) Date of publication of application: 10.07.2019
(73) Proprietor: thyssenkrupp Presta AG, 9492 Eschen (LI); thyssenkrupp AG, 45143 Essen (DE)
(72) Inventor: BODA, Gábor, 1081 Budapest (HU)
(74) Representative: thyssenkrupp Intellectual Property GmbH
(86) International application number: PCT/EP2016/070363
(87) International publication number: WO 2018/041331

(56) References cited:
- EP-A1- 2 159 584
- EP-A1- 3 504 106
- DE-A1-102006 051 799
- FR-A1- 2 723 904
- US-A1- 2009 021 091
- US-A1- 2013 307 448
- US-A1- 2014 055 059

## Description

The present invention relates to a motor vehicle steering system of a motor vehicle according to the preamble of claim 1.

Electric power assisted steering systems use an electric motor to assist the driver of a motor vehicle in steering operation. The electric motor is accommodated in a motor housing, on which generally a control device comprising a power electronics unit for controlling the electric motor is also disposed. The electric motor is usually located in an exposed position of the lower vehicle part. If the vehicle is driven on a wet road or a lower part of the vehicle is submerged in water, moisture permeates into the interior of the electric motor. If an excessive amount of moisture penetrates the electric motor, the motor may break down and driving of the electric motor may be stopped, hampering driving safety. Furthermore, moisture can lead to long-term damage like corrosion.

US 2015/0175192 A1 discloses a rack type electric power steering system with a moisture detection sensor attached to a power steering motor to detect moisture penetrating into the motor. The moisture detection sensor is a sensor for detecting moisture to output an electrical signal, and includes an infrared ray absorption type, a microwave type, and an electrical resistance type. The moisture sensor can detect large quantities of water inside the motor housing. However, these sensors are cost intensive and are not able to detect small amounts of moisture.

DE 10 2006 051799 A1 discloses a generic type of a motor vehicle steering system comprising a sensor device adapted to detect water in the motor housing. An electrode is mounted electrically insulated in the housing, and an electrolyte-forming substance is provided in the housing. Ingressing water will dilute the electrolyte-forming substance, forming an electrolyte liquid which provides an electrically conducting connection between the electrode and the housing. The increased conductivity is detected by electrical resistance measurement.

In EP 3 504 106 A1 an electrical measurement is proposed for water detection. This requires a sensitive measurement circuit, and an outside measurement voltage has to be applied. EP 3 504 106 A1 is a document according to Article 54(3) EPC.

It is an object of the present invention to provide a motor vehicle steering system with an improved and reliable sensor for detection of water penetration in the electric motor unit.

This object is achieved by a motor vehicle steering system having the features of claim 1. Accordingly, a motor vehicle steering system with a housing for a support device of the steering system, like an electric motor and/or a sensor device and/or an electronic device, with an electrical sensor device configured to detect a condition indicative of water being present in the housing is provided, wherein the electrical sensor device comprises a first electrode and a second electrode spaced apart from the first electrode, wherein the first electrode is formed by a non-insulated part of the support device and the second electrode is formed by the housing, whereby in of event of water being present in the housing, the electrical sensor builds up a galvanic cell and the electrical sensor device has a high impedance voltmeter that is connected to one of the motor phases to measure the voltage induced by the galvanic cell. By using the electric motor or a sensor device or an electronic device, such as a control unit, and the housing itself as parts of the sensor, an expensive additional sensor can be dispensed. Preferably the housing can be a steering gear housing or a motor housing or a control device housing. It can further be an integral housing of the motor and the controller.

Preferably, the electric motor has a star connection with a star point, wherein the first electrode is formed by the motor's star point.

Advantageously, the motor's star point is a copper conductor. In order to detect even small amounts of moisture or water entering the motor housing, it is preferred if the motor's star point is located close to the lowest point of the motor housing.

Preferably, the housing is grounded..

Preferably, the electric motor is a common three-phase electric motor.

It is further preferred, if the electrical sensor device has a processing unit which is designed to detect exceeding of a predefined threshold voltage induced by the galvanic cell indicative of water being present in the motor housing.

The motor vehicle steering system can be an electrically power assisted steering system or a steer-by-wire system.

One exemplary embodiment of the present invention is described below with aid of the drawings. In all figures the same reference signs denote the same components or functionally similar components.
Figure 1 shows an electromechanical power steering mechanism in a schematic illustration;
Figure 2 shows a schematic illustration of a motor controller of a three-phase motor.

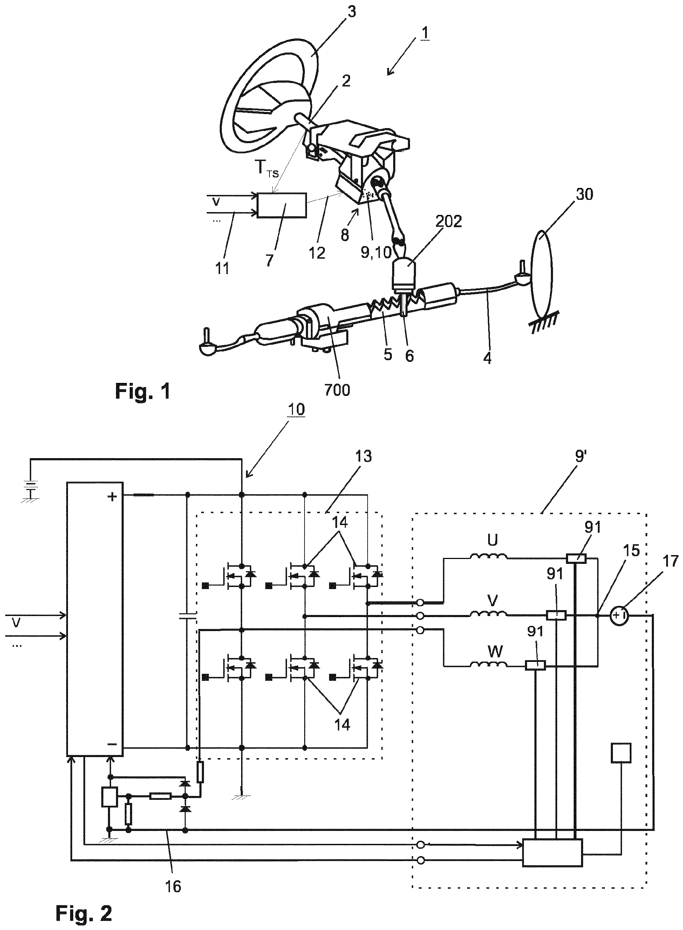

In figure 1 an electromechanical power steering mechanism 1 is schematically illustrated with a steering shaft 2 connected to a steering wheel 3 for operation by the driver. The steering shaft 2 is coupled to a steering rack 5 via a gear pinion 6. Steering rack rods 4 are connected to the steering rack 5 and to steered wheels 30 of the motor vehicle. A rotation of the steering shaft 2 causes an axial displacement of the steering rack 5 by means of the gear pinion 6, which is connected to the steering shaft 2 in a torque-proof manner. Electric power assist is provided through a steering controller 7, 700 and a power assist actuator 8 comprising the electric motor 9 and a motor controller 10. The steering controller 7 in the example receives signals 11 representative of the vehicle velocity v and the torque T_{TS} applied to the steering wheel by the vehicle operator. In response to the vehicle velocity v, the operator torque T_{TS} and the rotor position signal, the controller 7 determines the target motor torque T_{d} and provides the signal 12 through to the motor controller 10, where the motor currents are calculated via PWM (pulse-width modulation). In addition, as the rotor of the electric motor 9 turns, rotor position signals are generated within the electric motor 9 and provided to the steering controller 7. The electric motor 9 is in the example a permanent magnet-excited motor. The present invention relates to electric motors in motor vehicle steering system in general, in particular to electromechanical motor vehicle power steering mechanisms or steer-by-wire systems of motor vehicles.

In the following possible electric motor applications are described which are not limiting.

To provide steering assistance, the electric motor 9 can be mounted to the side of the rack housing e.g. driving a ball-screw mechanism via a toothed rubber belt and/or the rack-and-pinion gear system. Further an electric motor 9 can be arranged supporting the rotation of the steering shaft. In steer-by-wire-systems, the electric motor can be part of the feedback actuator.

In figure 2 a motor controller 10 of a support device, which is in the example an electric motor 9 with an inverter 13 is shown. The inverter 13 transforms voltages into the three-dimensional coordinate system of the motor 9 and sensors 202 transform the voltages into motor currents Iu,Iv,Iw. The servomotor 9 is actuated by the control unit via a set of MOSFETs 14, wherein with three phase windings six MOSFETs 14 are provided in total. For each winding a high side MOSFET and a low side MOSFET are included. Each MOSFET 14 switches the assigned phase winding U, V, W to the on-board vehicle power-supply voltage or the earth potential. This occurs at a high frequency so that the temporal average value acts as the effective voltage in the phase windings U, V, W. The three motor phases are connected together in a star-point 15. This is realized with a thick copper conductor, which is usually non-insulated and separated from other conductors by distance. The motor 9 is arranged in a motor housing 9' made of steel, preferably iron or nickel alloy, grounded to the subframe (chassis). The star-point 15 is preferably located close to the lowest point of the motor housing, where water aggregates. Both, the motor housing 9' and the star-point 15 are connected to a measurement circuit 16 via one phase winding, in the example, phase winding V. It is further possible that the connection between the star-point 15 and the measurement circuit 16 is direct. The measurement circuit 16 in the example of figure 2 is a high impedance voltmeter 16 which is connected to one of the motor phases to measure an induced voltage.

If there is water ingression in the motor and the water level is sufficient to reach the star-point conductor, a galvanic cell 17 is formed. In this case, the star-point 15 made of copper forms a positive electrode and the negative electrode is the motor housing 9', made of iron or nickel alloy. The galvanic cell 17 induces a DC voltage in the range of several hundred millivolts, which can be measured if the motor housing 9' and the star-point 15 are connected to the measurement circuit 16.

Since the induced voltage is DC of the order of hundreds of mV, it can be measured on any phase of the electric motor, but because it has high impedance it requires a high-impedance measurement circuit e.g. directly connected to an ADC or an amplifier. Clamping may be needed to protect the measurement circuit.

A processing unit is provided, that detects a condition indicative of water being present in the motor housing. Therefore the processing unit compared the measured voltage with a predefined threshold. If the measured galvanic potential exceeds the threshold, water ingression is detected.

## Claims

1. Motor vehicle steering system with a housing for a support device of the steering system with an electrical sensor device configured to detect a condition indicative of water being present in the housing , wherein the electrical sensor comprises a first electrode (15) and a second electrode spaced apart from the first electrode (15), wherein the first electrode (15) is formed by a non-insulated part of the support device and the second electrode is formed by the housing, **characterized in that** in event of water is present in the housing the electrical sensor build up a galvanic cell and the electrical sensor device has a high impedance voltmeter (16), that is connected to one of the supply phases of the support device to measure the voltage induced by the galvanic cell (17).

2. Motor vehicle steering system according to claim 1, **characterized in that** the housing is grounded.

3. Motor vehicle steering system according to one of the preceding claims, **characterized in that** the electrical sensor device has a processing unit which is designed to detect exceeding of a predefined threshold voltage induced by the galvanic cell (17) indicative of water being present in the housing.

4. Motor vehicle steering system according to one of the preceding claims , **characterized in that** the housing is a motor housing of an electric motor (9).

5. Motor vehicle steering system according to claim 4, **characterized in that** the electric motor (9) has a star connection with a star point (15), wherein the first electrode is formed by the motor's star point (15).

6. Motor vehicle steering system according to claim 5, **characterized in that** the motor's star point (15) is a copper conductor.

7. Motor vehicle steering system according to claim 5 or 6, **characterized in that** the motor's star point (15) is located close to the lowest point of the motor housing (9').

8. Motor vehicle steering system according to one of the preceding claims, **characterized in that** the electric motor (9) is a three-phase electric motor.

9. Motor vehicle steering system according to one of the preceding claims, **characterized in that** the motor vehicle steering system is an electric power assisted steering system or a steer-by-wire system.

## Patentansprüche

1. Kraftfahrzeug-Lenksystem mit einem Gehäuse für eine Trageinrichtung des Lenksystems mit einer elektrischen Sensoreinrichtung, die dazu ausgebildet ist, einen Zustand zu erfassen, der auf das Vorhandensein von Wasser in dem Gehäuse hinweist, wobei der elektrische Sensor eine erste Elektrode (15) und eine von der ersten Elektrode (15) beabstandete zweite Elektrode aufweist, wobei die erste Elektrode (15) durch einen nicht isolierten Teil der Trageinrichtung gebildet wird und die zweite Elektrode durch das Gehäuse gebildet wird,
**dadurch gekennzeichnet,**
**dass** der elektrische Sensor im Falle des Vorhandenseins von Wasser im Gehäuse eine galvanische Zelle aufbaut und die elektrische Sensoreinrichtung ein hochohmiges Voltmeter (16) aufweist, das mit einer der Versorgungsphasen der Trageinrichtung verbunden ist, um die durch die galvanische Zelle (17) induzierte Spannung zu messen.

2. Kraftfahrzeug-Lenksystem nach Anspruch 1, **dadurch gekennzeichnet, dass** das Gehäuse geerdet ist.

3. Kraftfahrzeug-Lenksystem nach einem der vorhergehenden Ansprüche, **dadurch gekennzeichnet, dass** die elektrische Sensoreinrichtung eine Verarbeitungseinheit aufweist, die dazu ausgebildet ist, das Überschreiten einer von der galvanischen Zelle (17) induzierten vordefinierten Schwellenspannung zu detektieren, die auf das Vorhandensein von Wasser im Gehäuse hinweist.

4. Kraftfahrzeug-Lenksystem nach einem der vorhergehenden Ansprüche, **dadurch gekennzeichnet, dass** das Gehäuse ein Motorgehäuse eines Elektromotors (9) ist.

5. Kraftfahrzeug-Lenksystem nach Anspruch 4, **dadurch gekennzeichnet, dass** der Elektromotor (9) eine Sternschaltung mit einem Sternpunkt (15) aufweist, wobei die erste Elektrode durch den Sternpunkt (15) des Motors gebildet wird.

6. Kraftfahrzeug-Lenksystem nach Anspruch 5, **dadurch gekennzeichnet, dass** der Sternpunkt (15) des Motors ein Kupferleiter ist.

7. Kraftfahrzeug-Lenksystem nach Anspruch 5 oder 6, **dadurch gekennzeichnet, dass** der Sternpunkt (15) des Motors in der Nähe des tiefsten Punktes des Motorgehäuses (9') angeordnet ist.

8. Kraftfahrzeug-Lenksystem nach einem der vorhergehenden Ansprüche, **dadurch gekennzeichnet, dass** der Elektromotor (9) ein Drehstrommotor ist.

9. Kraftfahrzeug-Lenksystem nach einem der vorhergehenden Ansprüche, **dadurch gekennzeichnet, dass** das Kraftfahrzeug-Lenksystem eine elektrische Servolenkung oder eine Steer-by-Wire-Lenkung ist.

## Revendications

1. Système de direction de véhicule à moteur avec un boîtier pour un dispositif de support du système de direction avec un dispositif capteur électrique configuré pour détecter une condition indiquant la présence d'eau dans le boîtier, le capteur électrique comprenant une première électrode (15) et une deuxième électrode espacée de la première électrode (15), la première électrode (15) étant formée par une partie non isolée du dispositif de support et la deuxième électrode étant formée par le boîtier, **caractérisé en ce que,** en cas de présence d'eau dans le boîtier, le capteur électrique constitue une cellule galvanique et le dispositif capteur électrique a un voltmètre à forte impédance (16), qui est relié à une des phases d'alimentation du dispositif de support pour mesurer la tension induite par la cellule galvanique (17) .

2. Système de direction de véhicule à moteur selon la revendication 1, **caractérisé en ce que** le boîtier est mis à la terre.

3. Système de direction de véhicule à moteur selon une des revendications précédentes, **caractérisé en ce que** le dispositif capteur électrique a une unité de traitement qui est conçue pour détecter le dépassement d'une tension seuil prédéfinie induite par la cellule galvanique (17) indiquant la présence d'eau dans le boîtier.

4. Système de direction de véhicule à moteur selon une des revendications précédentes, **caractérisé en ce que** le boîtier est un boîtier de moteur d'un moteur électrique (9).

5. Système de direction de véhicule à moteur selon la revendication 4, **caractérisé en ce que** le moteur électrique (9) a un branchement en étoile avec un point en étoile (15), la première électrode étant formée par le point en étoile (15) du moteur.

6. Système de direction de véhicule à moteur selon la revendication 5, **caractérisé en ce que** le point en étoile (15) du moteur est un conducteur en cuivre.

7. Système de direction de véhicule à moteur selon la revendication 5 ou 6, **caractérisé en ce que** le point en étoile (15) du moteur est situé près du point le plus bas du boîtier de moteur (9').

8. Système de direction de véhicule à moteur selon une des revendications précédentes, **caractérisé en ce que** le moteur électrique (9) est un moteur électrique triphasé.

9. Système de direction de véhicule à moteur selon une des revendications précédentes, **caractérisé en ce que** le système de direction de véhicule à moteur est un système de direction à assistance électrique ou un système de direction par câble.
